(19) Europäisches Patentamt
European Patent Office
Office européen des brevets

(11) **EP 4 150 729 B1**

(12) **EUROPÄISCHE PATENTSCHRIFT**

(45) Veröffentlichungstag und Bekanntmachung des Hinweises auf die Patenterteilung:
**28.02.2024 Patentblatt 2024/09**

(21) Anmeldenummer: **21759260.9**

(22) Anmeldetag: **04.08.2021**

(51) Internationale Patentklassifikation (IPC):
*H02H 6/00* (2006.01)    *H02H 7/085* (2006.01)
*H02P 29/64* (2016.01)    *G01K 7/42* (2006.01)

(52) Gemeinsame Patentklassifikation (CPC):
**H02H 7/085; G01K 7/42; H02H 6/00; H02P 29/64**

(86) Internationale Anmeldenummer:
**PCT/EP2021/071765**

(87) Internationale Veröffentlichungsnummer:
**WO 2022/043013 (03.03.2022 Gazette 2022/09)**

(54) **VERFAHREN ZUR ÜBERWACHUNG EINER WICKLUNGSTEMPERATUR**

METHOD FOR MONITORING A COIL TEMPERATURE

PROCÉDÉ DE SURVEILLANCE D'UNE TEMPÉRATURE D'ENROULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2020 EP 20193637**

(43) Veröffentlichungstag der Anmeldung:
**22.03.2023 Patentblatt 2023/12**

(73) Patentinhaber: **Siemens Aktiengesellschaft**
**80333 München (DE)**

(72) Erfinder:
• **JAJTIC, Zeljko**
**80992 München (DE)**
• **SACHSENHAUSER, Peter**
**84072 Au (DE)**
• **BÖHLING, Jürgen**
**85221 Dachau (DE)**
• **TAUBALD, Tobias**
**81543 München (DE)**
• **VOLMERT, Christian**
**81667 München (DE)**

(74) Vertreter: **Siemens Patent Attorneys**
**Postfach 22 16 34**
**80506 München (DE)**

(56) Entgegenhaltungen:
CN-A- 85 102 463    CN-A- 102 566 434
DE-A1-102006 027 174    DE-A1-102009 025 078
US-B1- 6 434 505

EP 4 150 729 B1

**Beschreibung**

Die Erfindung betrifft ein Verfahren zur Überwachung einer Wicklungstemperatur einer Wicklung einer elektrischen Maschine.

Für hochdynamische Beschleunigungen werden dynamoelektrische Maschinen benötigt, deren thermischer Schutz, insbesondere thermischer Motorschutz, für einen Temperaturanstieg von mindestens 20 K/s bis 30 K/s geeignet ist. Zum Schutz der Wicklung gegen Überhitzung werden heute meist thermische Sensoren, z.B. PTC-Sensoren, in den Maschinensträngen eingebaut.

Für höhere Temperaturanstiegsraten sind diese PTC-Sensoren jedoch nicht geeignet. Unter anderem aufgrund einer eigenen thermischen Trägheit wird ein Abschaltsignal verzögert, was eine Überhitzung der Maschine zur Folge hat. Dies kann zu einer Schädigung der Wicklung sowie zu einem Ausfall der Maschine führen.

Aus der DE 10 2009 025078 A1 ist ein Verfahren zur Berechnung der Temperatur wenigstens einer Komponente einer mehrere Komponenten aufweisenden elektrischen oder elektronischen Baugruppe, insbesondere eines Elektromotors für Kraftfahrzeuge, bekannt, wobei die Baugruppe von einer Steuereinheit gesteuert wird und ein Temperaturmodell vorgegeben wird, welches die thermischen Verhältnisse in der Baugruppe nachbildet.

Die US 6 434 505 B1 offenbart ein Verfahren zum Bestimmen einer momentanen Wicklungstemperatur einer Statorwicklung eines Dreiphasen-Wechselstrommotors.

Die DE 10 2006 027174 A1 zeigt ein Verfahren zur Begrenzung der Motortemperatur auf einen vorgegebenen maximalen Temperaturwert durch Begrenzung der Motorverlustleistung, wobei das Verfahren die Schritte umfasst: Messen der Umgebungstemperatur nahe dem Motor; Bestimmen der Motorverlustleistung; Schätzen der Motorwicklungstemperatur, bezogen auf die gemessene Umgebungstemperatur und die bestimmte Motorverlustleistung; Bestimmen einer maximalen Motorverlustleistung, die die Motortemperatur bis auf den vorgegebenen maximalen Temperaturwert innerhalb einer vorgegebenen Zeitspanne, bezogen auf die geschätzte Wicklungstemperatur, anheben würde; und Beschränken der Motorverlustleistung auf einen Wert, der unterhalb der bestimmten maximalen Verlustleistung liegt.

Die CN 102 566 434 A zeigt eine Methode zum Schutz vor Übertemperaturen.

Die CN 85 102 463 A zeigt ein Verfahren zur Erkennung der Motorlast und zum Überlastschutz.

Der Erfindung liegt die Aufgabe zugrunde, eine dynamoelektrische Maschine dahingehend zu verbessern.

Die Lösung der Aufgabe gelingt durch Anspruch 1, d.h. ein Verfahren zur Überwachung einer Wicklungstemperatur einer Wicklung einer elektrischen Maschine,

wobei die elektrische Maschine von einem Umrichter gespeist wird,
wobei mittels einer Vorrichtung

-   eine in die Wicklung eingeprägte Heizleistung ermittelt wird,
-   die Heizleistung mittels eines thermischen Modells ausgewertet wird,
-   bei Überschreiten eines mit der Heizleistung verknüpften kritischen Wicklungstemperaturwerts ein Warnsignal und/oder ein Abschaltsignal erzeugt wird,
-   eine relative Erhöhung eines Widerstands der Wicklung, insbesondere der Kupferwicklung bzw. einzelner UVW-Motorstränge, wenn sich die Wicklung erwärmt, aus der Heizleistung ermittelt wird, im Vergleich zu einem Standard-Referenzwert für 20°C Wicklungstemperatur, insbesondere Kupfertemperatur,
-   aus der relativen Erhöhung des Widerstandes die Wicklungstemperatur berechnet wird.

Die Erfindung eignet sich besonders gut für dynamoelektrische Maschinen. Jedoch ist die Erfindung auch bei Transformatoren anwendbar.

Das thermische Modell ist vorzugsweise ein $I^2t$-Modell.

Das thermische Modell ist vorzugsweise ein thermisches Maschinenmodell.

Der Wicklungstemperaturwert wird vorzugsweise aus der Heizleistung ermittelt.

Die Maschine arbeitet vorzugsweise im Motorbetrieb.

Bei Auftreten des Abschaltsignals ist die elektrische Maschine vorzugsweise sofort oder wenigstens zeitnah abzuschalten bzw. wird abgeschaltet.

Ein Warnsignal kann bei einer niedrigeren Temperaturschwelle, insbesondere vor dem Abschaltsignal, ausgelöst werden. Dies bietet die Möglichkeit, dass ein Bearbeitungszyklus, z.B. in einer Werkzeugmaschine, definiert vor einem Abschalten beendet werden kann.

Das Verfahren basiert vorteilhaft auf einer Ermittlung einer relativen Erhöhung eines Widerstands der Wicklung, insbesondere der Kupferwicklung (bzw. einzelner UVW-Motorstränge), wenn sich diese Wicklung erwärmt (vgl. physikalisches Grundgesetz der Temperaturabhängigkeit des elektrischen Widerstandes) im Vergleich zu einem Standard-Referenzwert für 20°C Wicklungstemperatur, insbesondere Kupfertemperatur, (auch "kalte Wicklung" genannt).

Aus dieser relativen Erhöhung des elektrischen Widerstandes kann mit Hilfe des physikalischen Grundgesetzes die Wicklungstemperatur berechnet werden.

Im Verfahren wird nicht direkt der elektrische Widerstand ermittelt, sondern die Heizleistung (linear proportional zum Widerstand gem. Pcu=I²R). Eine Messung des Widerstands erfordert meist eine gesonderte Messsequenz mit DC-Strömen, was störempfindlich ist und im laufenden Betrieb eine Unterbrechung erfordert.

Die momentane Heizleistung der Wicklung ist nicht störempfindlich und kann vorteilhaft im laufenden Betrieb mit normalen Betriebsströmen ermittelt werden, insbesondere mit den dazu benötigten Größen (z.B. aktueller Kommutierungswinkel, Outputleistung des Umrichters, mech. Outputleistung des Motors ...), die vorteilhaft alle in einem Umrichter vorliegen (und vorteilhaft zu jedem Zeitpunkt bekannt sind).

In einer vorteilhaften Ausführung wird die in die Wicklung eingeprägte Heizleistung umrichterseitig ermittelt.

Umrichterseitig bedeutet vorteilhaft: Innerhalb der Steuerung des Umrichters.

Dort sind vorteilhaft alle benötigten Größen vorhanden bzw. bekannt.

In einer vorteilhaften Ausführung wird die in die Wicklung eingeprägte Heizleistung während eines Zeitabschnitts gemessen und daraus eine mittlere Heizleistung ermittelt.

Dies gelingt vorteilhaft wenigstens im Wesentlichen in Echtzeit.

In einer vorteilhaften Ausführung wird die in die Wicklung eingeprägte Heizleistung im laufenden Umrichterbetrieb ermittelt.

Die Erfindung bietet den Vorteil einer sensorlosen Überwachung bzw. Messung der Wicklungstemperatur im laufenden Umrichterbetrieb einer elektrischen Maschine, insbesondere eines permanantmagneterregten Synchronmotors, wodurch eine Überhitzung sowie ein Ausfall der Maschine verhindert werden.

Die Überwachung der mittleren Wicklungstemperatur basiert vorteilhaft auf einer umrichterseitigen Messung der in die Wicklung eingeprägten Heizleistung, die in einem thermischen Modell, insbesondere I²t-Modell, ausgewertet wird.

Im thermischen Modell wird vorteilhaft aus gemessenen physikalischen Werten die Wicklungstemperatur bestimmt.

Bei Überschreiten des mit der Heizleistung verknüpften kritischen Wicklungstemperaturwerts wird ein Warnsignal und/oder ein Abschaltsignal generiert.

Beispielsweise beträgt für eine Auslegung nach Isolation der Wärmeklasse F die maximal zulässige Wicklungstemperatur 140°C (Mittelwert innerhalb der Wicklung) bzw. 155°C (Spitzenwert innerhalb der Wicklung).

Vorteilhaft wird die eingeprägte mittlere Heizleistung in einem Zeitabschnitt $\Delta t$ bei einer zu ermittelnden (also bisher unbekannten) Wicklungstemperatur im Umrichter ermittelt. Es gilt:

$$P_{Cu,x} = U_x \cdot I_x - P_{mech,x}$$

$$\text{Für } n_x = 0 \text{ gilt: } P_{Cu,x} = U_x \cdot I_x$$

Ferner gilt:

$$P_{mech,0} \approx k_T(I_x) \cdot I_{qx} \cdot n_x \cdot 2\pi/60$$

$P_{Cu,x}$ ist hierbei die mittlere Heizleistung bei einer unbekannten Temperatur x.

$U_x$ und $I_x$ sind eine Motorspannung und ein Motorstrom.

$P_{mech,x}$ ist die mechanische Leistung.

$n_x$ ist die Drehzahl.

$k_T(I_x)$ ist eine stromabhängige Drehmomentkonstante des Motors.

$I_{qx}$ ist eine drehmomentbildende Stromkomponente.

In einer vorteilhaften Ausführung wird die mittlere Heizleistung mit einer definierten und/oder vorher, insbesondere bei einer bekannten Wicklungstemperatur, ermittelten Heizleistung verglichen.

Die mittlere Heizleistung wird vorteilhaft gemessen.

Die bekannte Wicklungstemperatur wird vorteilhaft durch eine Referenzmessung bestimmt.

Als Referenzmessung eignet sich besonders gut eine Wicklungstemperatur bei $T_{Cu}$ = 20 °C.

Es gilt:

$$P_{Cu,20°C} = U_0 \cdot I_0 - P_{mech,0}$$

Es gilt vorzugsweise n = 0 und somit $P_{Cu,20°C} = U_0 \cdot I_0$

In einer vorteilhaften Ausführung wird durch eine relative Änderung der ermittelten Heizleistung eine Änderung eines Wicklungswiderstands bestimmt.

Relativ bedeutet hierbei vorzugsweise: relativ zu der Heizleistung der kalten Wicklung, vorteilhaft bei einer Bezugstemperatur der Wicklung, insbesondere Kupferwicklung, T cu=20°C.

Vorteilhaft wird durch eine relative Änderung der ermittelten Heizleistung zur Referenzmessung eine Änderung eines Wicklungswiderstand bestimmt.

Inklusive einer Skalierung mit Strömen, falls $I_x \neq I_0$, gilt:

$$P_{Cu,x} = I_x{}^2 \cdot R_x$$

$$P_{Cu,20°C} = I_0{}^2 \cdot R_{20°C}$$

Für den Wicklungswiderstand gilt:

$$R_x = R_{20°C} \cdot (P_{Cu,x} / P_{Cu,20°C}) \cdot (I_0 / I_x)^2$$

Vorteilhaft wird zudem ein Widerstand der Zuleitungen bzw. die dort anfallende Heizleistung bei der Ermittlung der Motorheizleistung berücksichtigt.

In einer vorteilhaften Ausführung wird jeder Maschinenstrang einzeln überwacht.

In einer vorteilhaften Ausführung wird auf Basis eines Kommutierungswinkels eine Strangheizleistung ermittelt.

Es kann zudem die ermittelte Heizleistung in die Ermittlung einfließen.

Dies gelingt vorteilhaft dadurch, dass für wenigstens einen, vorzugsweise jeden, Kommutierungswinkel eine genaue Verteilung der gesamten gemessenen Heizleistung auf die drei Motorstränge berechnet wird und somit jeder Strang separat thermisch überwacht werden kann (z.B. im Stillstand).

Die beschriebenen Formeln umfassen Effektivwerte, insbesondere $P_{Cu,x}$, $U_x$, $I_x$, was z.B. im Stillstand den DC-Messwerten entspricht bzw. beim Drehfeld sich auf eine Periode bezieht (Effektivwert sinusförmiger Größen).

Im Allgemeinen gilt vorzugsweise für die mittlere Heizleistung $P_{Cu,x}$, die in einem beliebigen Zeitintervall $\Delta t = t2-t1$ gemessen wird:

$$P_{Cu,x,mitt} = (1/\Delta t) \cdot \int_{\Delta t} \{ [u_x(t) \cdot i_x(t)] \, dt - p_{mech,x}(t) \, dt \}$$

Die Erfindung ermöglicht eine sensorlose Überwachung der mittleren Wicklungstemperatur im laufenden Umrichterbetrieb. Die Überwachung ist für jeden Strang einzeln möglich.

Bei mehrsträngigen Maschinen, insbesondere 3-strängigen Maschinen, wird vorteilhaft die Wicklung (z.B. UVW-Motorstränge) mit mehrphasigen (hier mit 3-phasigen) sinusförmigen Strömen, mit entsprechendem Phasenversatz (120° el. für m=3) zwischen den einzelnen Phasen bestromt, d. h. im zeitlichen Verlauf (bei sich drehendem Motor) sind vorzugsweise alle drei Strangströme sinusförmig, aber wegen ihrer Phasenverschiebung sind Momentanwerte der Ströme in einzelnen Motorsträngen unterschiedlich, gem. der Kommutierungswinkel des 3-phasigen sinusförmigen Systems.

Wenn sich beispielsweise die Maschine im Betriebszustand "Stillstand mit Belastung" befindet (Drehzahl n=0) und trotzdem ein Drehmoment geliefert werden muss (z.B. im Fall einer sog. hängenden Last), sind die Momentanströme der 3 UVW-Motorstränge untereinander nicht gleich und infolgedessen ist die Heizleistung ($I^2R$) und damit die thermische Belastung einzelner Stränge unterschiedlich.

So kann sich z.B. bei einem Strom in einem Strang (z.B. Strang U) der Amplitudenwert des sinusförmigen Verlaufs I-max=$\sqrt{2}$*Ieff gem. dem aktuellen Kommutierungswinkel einstellen, wobei die Ströme in den beiden anderen Motorsträngen (V und W) entsprechend dem 3-phasigen Stromsystem nur den halben Amplitudenwert Imax/2 aufweisen und zwar den gesamten Betriebszustand über.

Deshalb erwärmen sich die drei Stränge, für diesen und vorteilhaft für jeden anderen Kommutierungswinkel, im bestromten Stillstand der Maschine unterschiedlich stark. Der thermische Motorschutz bezieht sich vorteilhaft auf den am stärksten thermisch belasteten Strang, d. h. auf den Strang mit dem höchsten Stillstandsstrom aller drei UVW-Stränge, entsprechend dem aktuellen und dem Umrichter bekannten Kommutierungswinkel.

Die Erfindung bietet den Vorteil, dass kein thermisches ESB-Modell als Nachbildung des thermischen Netzwerkes des Motors nötig ist. Es wird vorteilhaft in jedem Zeitaugenblick direkt die Wicklungstemperatur ermittelt, d.h. direkt die Temperatur des überwachten Objektes, ohne Nachbildung der thermischen Interaktion und der Wärmeflüsse

EP 4 150 729 B1

mit der Umgebung und unabhängig von der Ursache bzw. Quelle der Wicklungserwärmung.

Das Verfahren kann auch dann angewendet werden, wenn die Wicklung durch äußere Quellen warm bzw. heiß geworden ist.

Die Erfindung ist zudem von Vorteil, da kein Temperatursensor benötigt wird.

Die Erfindung ist zudem von Vorteil, da kein thermisches Ersatzschaltbild der Maschine benötigt wird.

Die Erfindung gelingt ferner durch Anspruch 9, d.h. eine Vorrichtung zur Verwendung in einem derartigen Verfahren.

Die Erfindung gelingt ferner durch Anspruch 10, d.h. einen Antrieb, aufweisend eine dynamoelektrische Maschine, einen Umrichter und eine Vorrichtung.

Die Überwachung gelingt sensorlos. Dies reduziert einen Einbauaufwand von Bauteilen sowie Kosten dafür.

Ferner ist ein Kosten- und Zuverlässigkeitsvorteil für Kunden gegeben, da die fehleranfälligen Sensoren, Leitungen und sonstige Anschlusstechnik nicht benötigt werden.

Die Erfindung eignet sich besonders gut für permanenterregte Synchronmaschinen, z.B. mit Wasserkühlung. Hierzu zählen unter anderem Linear- und Torque-Motoren. Sie werden als Einbaumotoren, z.B. in Direktantrieben für Werkzeugmaschinen, für hochdynamische Beschleunigungen eingesetzt.

Die Erfindung ist von Vorteil, da sehr hohe Beschleunigungen ermöglicht werden. Dies ist unter anderem mit sehr hohen Maximalströmen bzw. einer hohen $I_{max}$-Steigerung verbunden. Die Erfindung ermöglicht hierbei eine gute Handhabung eines Temperaturanstiegs von z.B. 45 K/s bis 70 K/s.

Die Erfindung bietet den Vorteil, dass eine energieeffiziente und zudem verbesserte thermische Motorausnutzung, die für alle Betriebszustände optimierbar ist, vorliegt.

Ferner gibt es keine Probleme bzgl. einer sicheren elektrischen Trennung, da keine Sensoren dicht an der Wicklung verbaut werden müssen. Zudem müssen keine Sicherheitsreserven eingeplant werden.

Im Folgenden wird die Erfindung anhand der in den Figuren gezeigten Ausführungsbeispiele näher beschrieben und erläutert. Es zeigen:

FIG 1    einen möglichen Ablauf des erfindungsgemäßen Verfahrens,
FIG 2    einen Antrieb,
FIG 3    einen Vergleich zweier Verläufe der Wicklungstemperatur,
FIG 4    FIG 5 und FIG 6 Verläufe aus einem beispielhaften Lastzyklus.

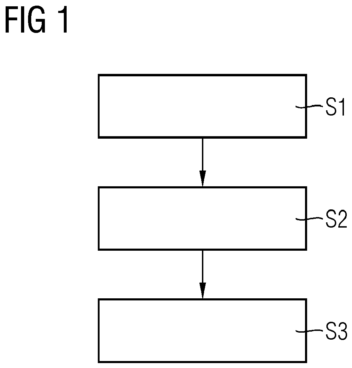

FIG 1 zeigt einen möglichen Ablauf des erfindungsgemäßen Verfahrens.

Das Verfahren zur Überwachung einer Wicklungstemperatur einer Wicklung einer elektrischen Maschine, wobei die elektrische Maschine von einem Umrichter gespeist wird, umfasst die folgenden Verfahrensschritte:
In einem Verfahrensschritt S1 wird eine in die Wicklung eingeprägte Heizleistung ermittelt.

In einem Verfahrensschritt S2 wird die Heizleistung mittels eines thermischen Modells ausgewertet.

In einem Verfahrensschritt S3 wird bei Überschreiten eines mit der Heizleistung verknüpften kritischen Wicklungstemperaturwerts ein Warnsignal und/oder ein Abschaltsignal erzeugt.

Wie bereits erläutert, wird die Heizleistung der Wicklung ermittelt. Vorteilhaft gelingt dies dadurch, dass aus im Umrichter gemessenen Strömen bzw. Spannungen die Heizleistung berechnet wird.

Zwei beispielhafte Fälle hierzu sind:

Wenn die komplette Ausgangsleistung des Umrichters vorzugsweise gänzlich zum Heizen des ohmschen Wicklungswiderstandes verwendet wird (im Stillstand, n=0, ist die mechanische Ausgangsleistung des Motors Pmech=0; die aktuelle Motordrehzahl ist dem Umrichter vorteilhaft dauernd bekannt, also vorzugsweise in jedem Zeitaugenblick) wird die Heizleistung vom Umrichter bzw. innerhalb des Umrichters mittels Messung von Ux und Ix im 3-Phasen-System ermittelt.

In diesem Fall kann man von einer gemessenen Heizleistung sprechen.

Falls der Motor zum betrachteten Zeitabschnitt eine mechanische Ausgangsleistung liefert (Pmech#0, weil n≠0), wird die Heizleistung der Wicklung vorteilhaft von der gelieferten Ausgangsleistung des Umrichters durch Abzug der vom Motor gelieferten mechanischen Leistung (Pmech) ermittelt bzw. berechnet.

Die Berechnung der Heizleistung der Wicklung erfolgt vorzugsweise nach der Formel: P_cu= P_output - P_mech, wofür der Umrichter vorteilhaft über alle erforderlichen Größen verfügt, nämlich P_mech= M_motor*n und das Motordrehmoment M_motor=Iq*k_T.

Dabei ist mit Iq der drehmomentbildende Strom bezeichnet, den der Umrichter erzeugt und in den Motor einprägt (also ist in diesem Fall neben der Drehzahl n auch der Strom Iq dem Umrichter eine bekannte Größe), k_T ist die Drehmomentkonstante des Motors, die vorzugsweise für jeden Motor mit seiner sog. Umrichter-Parameterliste eingelesen wird.

5

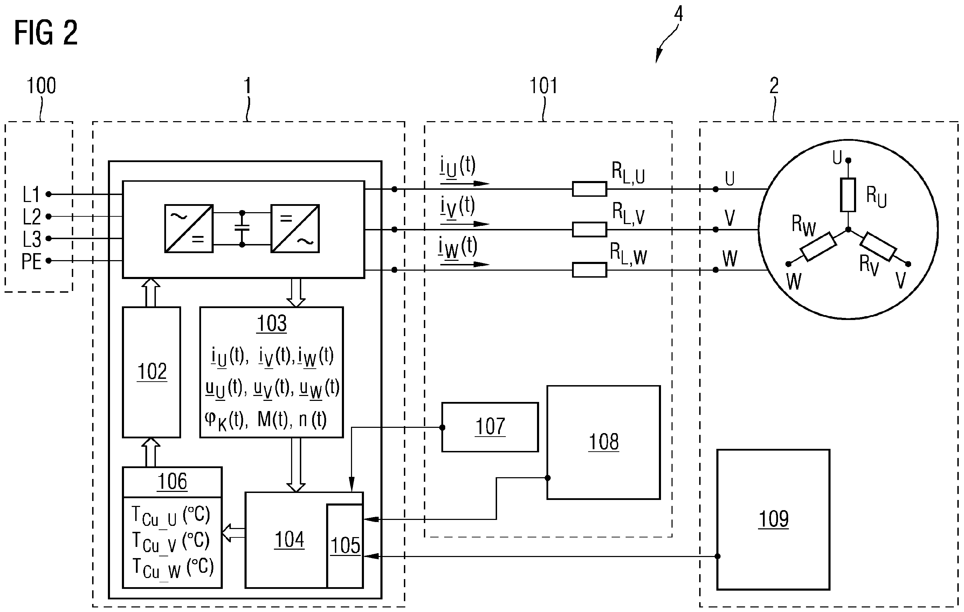

Bezugnehmend auf die genannten Formeln kann die Heizleistung P_kabel, die an den Leitungen zwischen Umrichter und Motor anfällt, abgezogen werden, um die reine Heizleistung in der Motorwicklung zu erhalten. Vorteilhaft sind hierzu entsprechende Daten über Leitungen bekannt, die für die Antriebskonfiguration in den Umrichter als Parameter eingelesen werden können (siehe auch Bezugszeichen 101 in FIG 2).

Meist ist ein Anteil der Kabel-Heizleistung im Vergleich zur Heizleistung in der Wicklung viel kleiner und falls Leitungsdaten nicht bekannt sind, kann dieser Anteil unberücksichtigt bleiben. Das vorgeschlagene Verfahren ist dennoch anwendbar, nur mit einer reduzierten Genauigkeit.

FIG 2 zeigt einen Antrieb 4. Der Antrieb 4 weist eine elektrische Maschine 2 sowie einen Umrichter 1 auf. Der Umrichter umfasst eine Vorrichtung zur Durchführung des oben beschriebenen Verfahrens.

Die Vorrichtung kann Hardware, z. B. Messtechnik zur Erfassung von Betriebsgrößen, aufweisen. Die Vorrichtung kann zudem ein Berechnungsmodell aufweisen.

Der Umrichter 1 ist mit einem Netz 100, aufweisend L1, L2, L3 und PE, verbunden.

Eine Erfassung von Betriebsgrößen, insbesondere aktuellen Betriebsgrößen wie Strömen, Spannungen, Drehmoment und Drehzahl, ist durch einen Block 103 dargestellt. Die Betriebsgrö-ßen werden in einem thermischen Modell 104 verarbeitet. Ein Block 105 dient einer Initialisier-Prozedur, bei welcher vorteilhaft eine Referenzmessung durchgeführt wird.

Eine Ermittlung der Wicklungstemperatur, insbesondere strangbezogen, erfolgt in einem Block 106.

Ein thermischer Motorschutz 102 erzeugt vorzugsweise das Warn- bzw. Abschaltsignal.

Über eine Leitung 101 sind Umrichter 1 und Maschine 2 verbunden. Die Figur zeigt die Ströme iu (t), iv (t) und iw (t). Dies sind vorteilhaft Betriebsströme im laufenden Betrieb. Ferner zeigt die Figur die Leitungswiderstände $R_{L,U}$, $R_{L,V}$ und $R_{L,W}$.

Im Modell 104 werden zudem Leitungsdaten berücksichtigt. Dies ist durch Block 107 und durch Block 108 dargestellt.

Block 107 gibt vorteilhaft Aufschluss über eine Umgebungstemperatur $T_0$.

Block 108 gibt vorteilhaft Aufschluss, insbesondere bei Umgebungstemperatur, über Leitungsdaten wie den Leitungswiderstand, einen Leitungsquerschnitt sowie eine Leitungslänge.

Die Maschine 2 umfasst in der Figur drei Stränge U, V und W.

Im Modell 104 werden zudem Maschinendaten berücksichtigt. Dies ist durch Block 109 dargestellt.

Block 109 gibt vorteilhaft Aufschluss über Wicklungswiderstände $R_U$, $R_V$ und $R_W$, Wicklungsquerschnitte, Gewicht und Ströme .

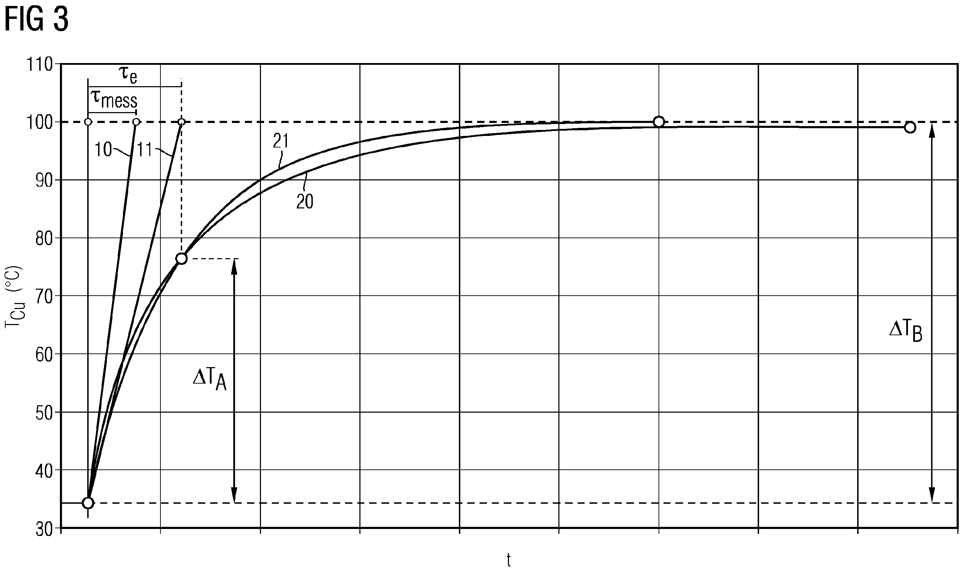

FIG 3 zeigt einen Vergleich zwischen einem mittels des Verfahrens ermittelten Verlauf 20 der Wicklungstemperatur mit einem mittels einer e-Funktion ermittelten Verlauf 21.

Der Verlauf 21 zeigt eine Nachbildung der Wicklungstemperatur $T_{Cu}(t)$ im Verlauf der Zeit t mit nur einer Zeitkonstante $\tau_e$ der e-Funktion. Dies stellt ein thermisches Motormodell mit nur einer thermischen Kapazität, ein sogenanntes Ein-Massen-Modell, dar. Der Verlauf 21 zeigt eine starke Abweichung vom ermittelten Echtzeit-Verlauf 20 während eines Erhitzungsvorgangs.

Die Figur zeigt ferner eine Tangente 10 für $\tau_{mess}$ sowie eine Tangente 11 für $\tau_e$. Die Tangenten zeigen die starke Abweichung zwischen den Anfangssteigungen der beiden Verläufe.

Es wird deutlich, dass bei Verfahren, die den Verlauf 21 zur Folge haben, große Sicherheitsreserven erforderlich sind, was zu einer schlechten Motorausnutzung führt.

Das erfindungsgemäße Verfahren, welches auf einer EchtzeitMessung der Wicklungstemperatur mittels einer Messung der Heizleistung vorzugsweise im laufenden Umrichterbetrieb basiert, ermöglicht eine sehr gute Motorausnutzung.

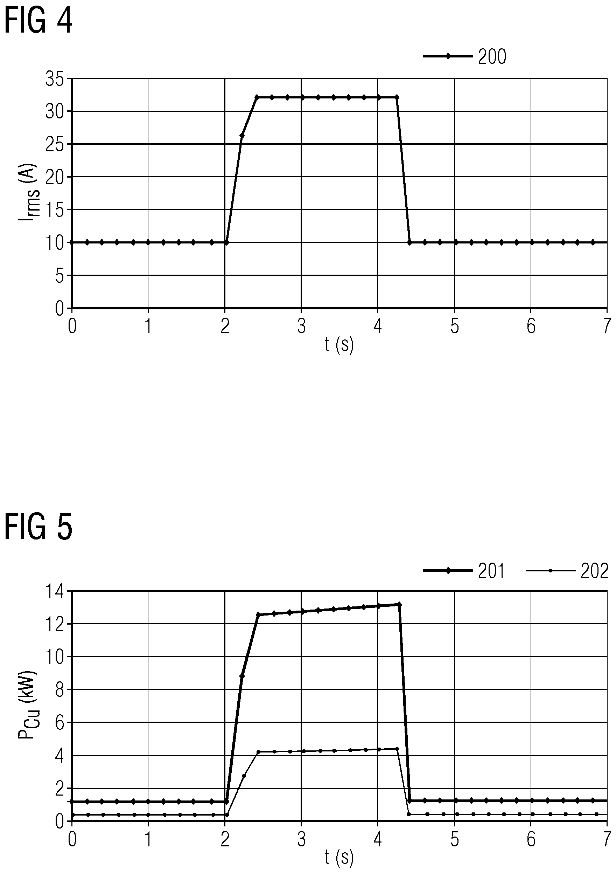

In den FIG 4, FIG 5 und FIG 6 sind Verläufe aus einem beispielhaften Lastzyklus des Motorbetriebs dargestellt. Die Figuren zeigen einen Stromverlauf, gemessene Heizleistungen (für drei Stränge und ein Summenwert) und der daraus ermittelte Verlauf der Wicklungstemperatur (für drei Stränge).

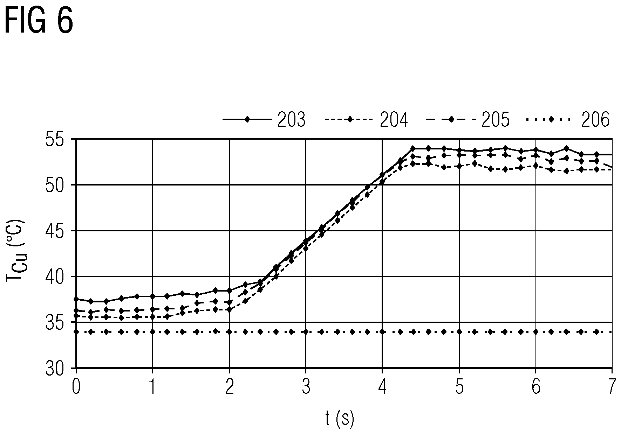

FIG 4 zeigt einen beispielhaften Verlauf 200 eines Stroms $I_{rms}$ der Stränge U, V, W in Abhängigkeit der Zeit t. FIG 5 zeigt einen beispielhaften Verlauf 202 der Heizleistung $P_{Cu}$ der Stränge U, V, W in Abhängigkeit der Zeit t. FIG 5 zeigt ferner einen Verlauf 201 einer Gesamtheizleistung $P_{Cu}$. FIG 6 zeigt beispielhafte Verläufe 203 (Strang U), 204 (Strang V) und 205 (Strang W) der Wicklungstemperatur $T_{Cu}$ in Abhängigkeit der Zeit t. Zudem ist ein Verlauf einer Kühlwassertemperatur 206 dargestellt.

**Patentansprüche**

1. Verfahren zur Überwachung einer Wicklungstemperatur einer Wicklung einer elektrischen Maschine (2),

    wobei die elektrische Maschine (2) von einem Umrichter (1) gespeist wird,

wobei mittels einer Vorrichtung

- eine in die Wicklung eingeprägte Heizleistung ermittelt wird,
- die Heizleistung mittels eines thermischen Modells (104) ausgewertet wird,
- bei Überschreiten eines kritischen Wicklungstemperaturwerts ein Warnsignal und/oder ein Abschaltsignal erzeugt wird,

**dadurch gekennzeichnet, dass** mittels der Vorrichtung

- eine relative Erhöhung eines Widerstands der Wicklung, insbesondere der Kupferwicklung bzw. einzelner UVW-Motorstränge, wenn sich die Wicklung erwärmt, aus der Heizleistung ermittelt wird, im Vergleich zu einem Standard-Referenzwert für 20°C Wicklungstemperatur, insbesondere Kupfertemperatur,
- aus der relativen Erhöhung des Widerstandes die Wicklungstemperatur berechnet wird.

2. Verfahren nach Anspruch 1, wobei die in die Wicklung eingeprägte Heizleistung umrichterseitig ermittelt wird.

3. Verfahren nach einem der vorhergehenden Ansprüche, wobei die in die Wicklung eingeprägte Heizleistung während eines Zeitabschnitts gemessen wird und daraus eine mittlere Heizleistung ermittelt wird.

4. Verfahren nach einem der vorhergehenden Ansprüche, wobei die in die Wicklung eingeprägte Heizleistung im laufenden Umrichterbetrieb ermittelt wird.

5. Verfahren nach einem der vorhergehenden Ansprüche, wobei die mittlere Heizleistung mit einer definierten und/oder vorher, insbesondere bei einer bekannten Wicklungstemperatur ermittelten, Heizleistung verglichen wird.

6. Verfahren nach einem der vorhergehenden Ansprüche, wobei durch eine relative Änderung der ermittelten Heizleistung zur Heizleistung der kalten Wicklung, vorteilhaft bei einer Bezugstemperatur der Wicklung, insbesondere Kupferwicklung, T_cu=20°C, eine Änderung eines Wicklungswiderstand bestimmt wird.

7. Verfahren nach einem der vorhergehenden Ansprüche, wobei jeder Maschinenstrang einzeln überwacht wird.

8. Verfahren nach einem der vorhergehenden Ansprüche, wobei auf Basis eines Kommutierungswinkels eine Strangheizleistung ermittelt wird.

9. Vorrichtung zur Überwachung einer Wicklungstemperatur einer Wicklung einer elektrischen Maschine (2),

wobei die Vorrichtung geeignet ist

- eine in die Wicklung eingeprägte Heizleistung zu ermitteln, T
- die Heizleistung mittels eines thermischen Modells (104) auszuwerten,
- bei Überschreiten eines kritischen Wicklungstemperaturwerts ein Warnsignal und/oder ein Abschaltsignal zu erzeugen, T

**dadurch gekennzeichnet, dass** T
die Vorrichtung weiter geeignet ist T

- eine relative Erhöhung eines Widerstands der Wicklung, insbesondere der Kupferwicklung bzw. einzelner UVW-Motorstränge, wenn sich die Wicklung erwärmt, aus der Heizleistung zu ermitteln, im Vergleich zu einem Standard-Referenzwert für 20°C Wicklungstemperatur, insbesondere Kupfertemperatur, und T
- aus der relativen Erhöhung des Widerstandes die Wicklungstemperatur zu berechnen.

10. Antrieb (4), aufweisend eine dynamoelektrische Maschine (2), einen Umrichter (1) und eine Vorrichtung nach Anspruch 9.

**Claims**

1. Method for monitoring a winding temperature of a winding of an electric machine (2),

wherein the electric machine (2) is powered by a converter (1),
wherein by means of an apparatus

- a heating power applied to the winding is determined,
- the heating power is evaluated using a thermal model (104),
- a warning signal and/or a switch-off signal is generated when a critical winding temperature value is exceeded,

**characterised in that** by means of the apparatus

- a relative increase in a resistance of the winding, in particular of the copper winding or individual UVW motor strands, when the winding heats up, is determined from the heating power, in comparison with a standard reference value for 20°C winding temperature, in particular copper temperature,
- the winding temperature is calculated from the relative increase in the resistance.

2. Method according to claim 1, wherein the heating power applied to the winding is determined on the converter side.

3. Method according to one of the preceding claims, wherein the heating power applied to the winding is measured for a period of time and an average heating power is determined therefrom.

4. Method according to one of the preceding claims, wherein the heating power applied to the winding is determined during ongoing converter operation.

5. Method according to one of the preceding claims, wherein the average heating power is compared with a defined and/or previously determined heating power, in particular at a known winding temperature.

6. Method according to one of the preceding claims, wherein a change in a winding resistance is determined by a relative change in the determined heating power in relation to the heating power of the cold winding, advantageously at a reference temperature of the winding, in particular copper winding, $T cu=20°C$.

7. Method according to one of the preceding claims, wherein each machine train is monitored individually.

8. Method according to one of the preceding claims, wherein a phase heating power is determined on the basis of a commutation angle.

9. Apparatus for monitoring a winding temperature of a winding of an electric machine (2),

wherein the apparatus is suitable for

- determining a heating power applied to the winding,
- evaluating the heating power using a thermal model (104),
- generating a warning signal and/or a switch-off signal when a critical winding temperature value is exceeded,

**characterised in that**
the apparatus is furthermore suitable for

- determining a relative increase in a resistance of the winding, in particular of the copper winding or individual UVW motor strands, when the winding heats up, from the heating power, in comparison with a standard reference value for 20°C winding temperature, in particular copper temperature, and
- calculating the winding temperature from the relative increase in the resistance.

10. Drive (4), having a dynamoelectric machine (2), a converter (1) and an apparatus according to claim 9.

**Revendications**

1. Procédé de contrôle de la température d'un enroulement d'une machine (2) électrique,

dans lequel on alimente la machine (2) électrique par un onduleur (1),
dans lequel au moyen d'un dispositif

- on détermine une puissance calorifique imprimée à l'enroulement,
- on évalue la puissance calorifique au moyen d'un modèle (104) thermique,
- si une valeur critique de la température de l'enroulement est dépassée, on produit un signal d'alerte et/ou un signal d'arrêt,

**caractérisé en ce que**, au moyen du dispositif,

- on détermine, à partir de la puissance calorifique, une augmentation relative de la résistance de l'enroulement, en particulier de l'enroulement en cuivre ou de divers ensembles moteurs UVW, lorsque l'enroulement s'échauffe, par rapport à une valeur de référence standard à une température de l'enroulement de 20° C, en particulier de la température du cuivre,
- on calcule la température de l'enroulement à partir de l'augmentation relative de la résistance.

2. Procédé suivant la revendication 1, dans lequel on détermine, du côté de l'onduleur, la puissance calorifique imprimée à l'enroulement.

3. Procédé suivant l'une des revendications précédentes, dans lequel on mesure la puissance calorifique imprimée à l'enroulement pendant un laps de temps et on en détermine une puissance calorifique moyenne.

4. Procédé suivant l'une des revendications précédentes, dans lequel on détermine la puissance calorifique imprimée à l'enroulement en fonctionnement continu de l'onduleur.

5. Procédé suivant l'une des revendications précédentes, dans lequel on compare la puissance calorifique moyenne à une puissance définie et/ou précédente, déterminée, en particulier à une température connue de l'enroulement.

6. Procédé suivant l'une des revendications précédentes, dans lequel, par une variation relative de la puissance calorifique déterminée, on détermine, pour la puissance calorifique de l'enroulement froid, avantageusement à une température de référence de l'enroulement, notamment de l'enroulement de cuivre, $T\_cu = 20° C$, une variation de la résistance de l'enroulement.

7. Procédé suivant l'une des revendications précédentes, dans lequel on contrôle individuellement chaque ensemble de la machine.

8. Procédé suivant l'une des revendications précédentes, dans lequel on détermine une puissance calorifique d'un ensemble sur la base d'un angle de commutation.

9. Dispositif de contrôle d'une température de l'enroulement d'une machine (2) électrique,

dans lequel le dispositif est propre

- à déterminer une puissance calorifique imprimée à l'enroulement,
- à évaluer la puissance calorifique au moyen d'un modèle (104) thermique,
- si une valeur critique de la température de l'enroulement est dépassée, à produire un signal d'alerte et/ou un signal d'arrêt,

**caractérisé en ce que**
le dispositif est propre en outre

- à déterminer, à partir de la puissance calorifique, une augmentation relative de la résistance de l'enroulement, en particulier de l'enroulement en cuivre ou de divers ensembles moteurs UVW, lorsque l'enroulement s'échauffe, par rapport à une valeur de référence standard à une température de l'enroulement de 20° C, en particulier de la température du cuivre, et
- à calculer la température de l'enroulement à partir de l'augmentation relative de la résistance.

10. Entraînement (4) comportant une machine (2) dynamoélectrique, un onduleur (1) et un dispositif suivant la revendication 9.

FIG 1

FIG 2

FIG 3

EP 4 150 729 B1

# FIG 4

# FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009025078 A1
- US 6434505 B1
- DE 102006027174 A1
- CN 102566434 A
- CN 85102463 A